# EUROPEAN PATENT SPECIFICATION

(11) **EP 3 027 991 B1**
(45) Date of publication and mention of the grant of the patent: **01.07.2020**
(21) Application number: 14759267.9
(22) Date of filing: 14.07.2014
(51) Int. Cl.: F27B 9/24, F27B 9/36, F27D 99/00

(54) **A RADIATING HEATING MODULE FOR CONTINUOUS-CYCLE FIRING KILNS OF CERAMIC PRODUCTS**
STRAHLENDES HEIZMODUL FÜR DURCHLAUFBRENNÖFEN FÜR KERAMISCHE PRODUKTE
MODULE DE CHAUFFAGE À RAYONNEMENT POUR FOURS DE CUISSON DE PRODUITS CÉRAMIQUES À CYCLE CONTINU

(30) Priority: 02.08.2013 IT RE20130059
(43) Date of publication of application: 08.06.2016
(73) Proprietor: Sacmi Cooperativa Meccanici Imola Societa' Cooperativa, 40026 Imola (IT)
(72) Inventor: RICCI, Claudio, I-40026 IMOLA BOLOGNA (IT); ACERBI, Pierugo, I-48010 CASOLA VALSENIO RAVENNA (IT)
(74) Representative: Corradini, Corrado
(86) International application number: PCT/IB2014/001339
(87) International publication number: WO 2015/015263

(56) References cited:
- EP-A2- 1 231 444
- WO-A1-2009/118633
- WO-A1-2010/069706
- DE-A1- 10 117 793
- JP-A- H10 132 211
- US-A- 5 906 485

## Description

### TECHNICAL FIELD

The present invention relates to firing kiln for ceramic products such as tiles and sanitary slabs and the like.

In particular, the invention relates to kilns of the continuous type, which comprise, internally of a tunnel-conformed structure, a roller conveyor on which the material is advanced with a continuous motion.

### BACKGROUND ART

The kiln comprises a series of heating means, aligned on the lateral walls of the tunnel and situated both above and below the roller plane, so as to create the desired firing profile internally of the firing chamber.

Tunnel kiln of this kind are disclosed for example in documents US5906485 and EP1231444.

The heating means are generally burners of the convection type, having a free flame, supplied with gas and sometimes liquid fuel, which heat the material mainly by convection.

The hot combustion gases generated by the burners are conveyed in a counter-current direction with reference to the advancement direction of the material.

Internally of the kiln, zones are defined that are dedicated to the various steps of the firing cycle:
- a first pre-heating zone A, in which the temperature is brought from about 25°C at the inlet of the kiln to about 350°C; this zone is crossed in counter-current by the hot combustion gases generated in the zones downstream, and can also be without heating means; a chimney flue is located in proximity of the inlet of zone A which flue collects and discharges the hot gases and the combustion fumes of zone A, and zones B and C located downstream;
- a second pre-firing zone B, comprising burners, in which the temperature of the kiln rises from about 350°A to about 1,220°C;
- a third firing zone C in which burners are present and maintain the temperature at about 1,200°C.

A fourth zone, i.e. a cooling zone, is located downstream of the firing zone C, in which the temperature is first rapidly brought to about 600°C (direct cooling), and then slowly to about 450°C (indirect cooling), and lastly progressively to 50°C, so as to effectively and controlledly cool the material, so as to prevent deformations and residual internal tensions.

The most critical zone of the kiln is the firing zone C, in which the maximum temperature must be maintained constant over the whole advancing front of the material, and the atmosphere as far as possible homogeneous and neutral, so as to avoid defects in the material.

The firing zone C is determinant for the purposes of the product quality, since it is in this zone that the phase transformations are completed for the creation of new structures internally of the material. If the product is glazed on the surface, in this zone the vitreous frits are fused to give the surface the desired glassiness.

The control of the firing zone is made still more important by the increasing wide-ranging use of vitrified stoneware, which today represents about 70% of the world production of ceramic tiles.

Vitrified stoneware exhibits a high shrinkage during the firing step (6-8% linear), which makes control of the firing temperature even more important, especially where the new ceramic phases are formed (zone C).

To this can be added two recent tendencies of the market which have a direct impact on the production methods:
- the increase of the dimensions of the ceramic tiles-slabs which can reach beyond 1 metre per side, with a significant increase in the width of the kiln and the advancement front of the material, and
- the increase in production of slim-thickness slabs (4 - 5 mm, instead of the traditional sizes of 8 - 12 mm).

These new factors tend to exasperate the working conditions of the continuous roller-kiln, which therefore needs improving in terms of design and the functioning process.

Roller kilns are known which comprise, at least in the firing zone, burners known as "radiating" which prevent the product from coming into contact with the combustion gases to the entire advantage of the product and the control of the temperature and the atmosphere in the firing zone.

These burners, also known as self-recuperative burners with radiant tubes are constituted by a conventional burner coupled to a pair of coaxial tubes, of which an external one is blind, which realize the pre-heating of the combustion air by causing it to meet, in counter-current, the combustion gases.

These are however expensive and complex devices, which require accurate mounting and maintenance, and which due to the particular configuration of the two coaxial tubes lead to high load losses which are translated into a high energy consumption for the fans.

### DISCLOSURE OF THE INVENTION

The present invention has the aim of obtaining a substantially uniformity of the firing temperature over the whole width of the kiln (the advancing front of the material) without any contact between the fumes and the atmosphere of the firing chamber, entirely to the advantage also of the surface qualities of the finished product, with an above-average shininess and compactness of the surfaces and an absence of defects, all attained with a solution that is simple and economical and highly energy-efficient.

This aim is attained by a device having the characteristics set down in the independent claim.

The dependent claims relate to further advantageous characteristics of the invention, aimed at improving the final result.

The invention comprises a radiating heating module of a portion of tunnel kiln, in which at least a pair of radiant tubes made of a heat-resistant material such a crystallised silicon carbide, are crossed by the combustion fumes. The two tubes are parallel to one another, and can be located on a same side of the roller conveyor, or also on the opposite sides, i.e. one above and one below the conveyor.

Each of the two radiant tubes comprises, at an end thereof, a traditional burner and at the opposite end a heat exchanger.

The two radiant tubes are located flanked, transversally to the tunnel and parallel to the conveyor rollers of the tiles at the same distance therefrom. They can also be located on above and one below the roller plane.

The two radiant tubes of a pair are reciprocally orientated such that, on a same side of the tunnel, to an end of the tube of the pair of tubes comprising the burner corresponds the end of the other tube of the same pair of tubes comprising the heat exchanger.

The combustion air of the burner of a tube of the same pair of tubes is heated by passing through the heat exchanger located at the end of the other tube of the pair of tubes.

The hot combustion gases in outlet from each of the heat exchangers are sent to other zones of the kiln, so as not to dissipate the heat.

The hot combustion gases are preferably sent to heat the pre-firing zone. The combustion air is heated up to about 500°C in the heat exchanger, with a consequent energy recuperation.

The fumes exit the heat exchanger at about 800°C and preferably re-enter in zone B of the kiln (pre-firing), regulated between 800°C and 900°C.

The heating module of the invention can also comprise two pairs of radiant tubes, where in each pair the tubes are arranged as described herein above. Each of the heating modules, or a group thereof, can be directly mounted on the lateral walls of the tunnel kiln, or comprise two opposite portions of the lateral walls of the kiln, so as to realise a prefabricated element or module able to be mounted in the kiln in the use position.

### BRIEF DESCRIPTION OF DRAWINGS

The constructional and functional characteristics of the invention will clearly emerge from the detailed description that follows, which with the aid of the accompanying tables of drawings illustrates a non-limiting example of various preferred embodiments.
Figure 1 is a schematic longitudinal vertical section of the tunnel kiln according to the invention.
Figure 1A is a profile of the temperatures thereof.
Figure 1B is a profile of the pressure of the kiln.
Figure 2 is a perspective view of the module of the invention.

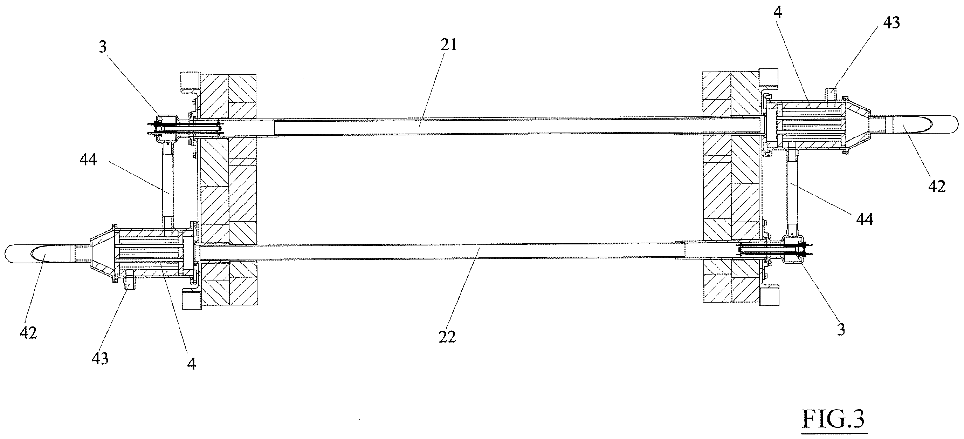

Figure 3 is the section of figure 2 taken on the axis of the tubes.
Figure 4 is a sectioned perspective view of the heat exchanger according to the invention.
Figure 5 schematically illustrates the object of figure 2.
Figure 6 is a schematic view of the arrangement of a plurality of modules of figure 5.
Figure 7 illustrates a variant of figure 6.

### BEST MODE FOR CARRYING OUT THE INVENTION

The figures illustrate a kiln 1 according to the invention, conformed as a tunnel and comprising a roller plane 10 on which the material is advanced, above and below which the heat generators are located.

In the longitudinal direction the kiln comprises four distinct zones and precisely a pre-heating zone A, a pre-firing zone B, a firing zone C and a controlled cooling zone D .

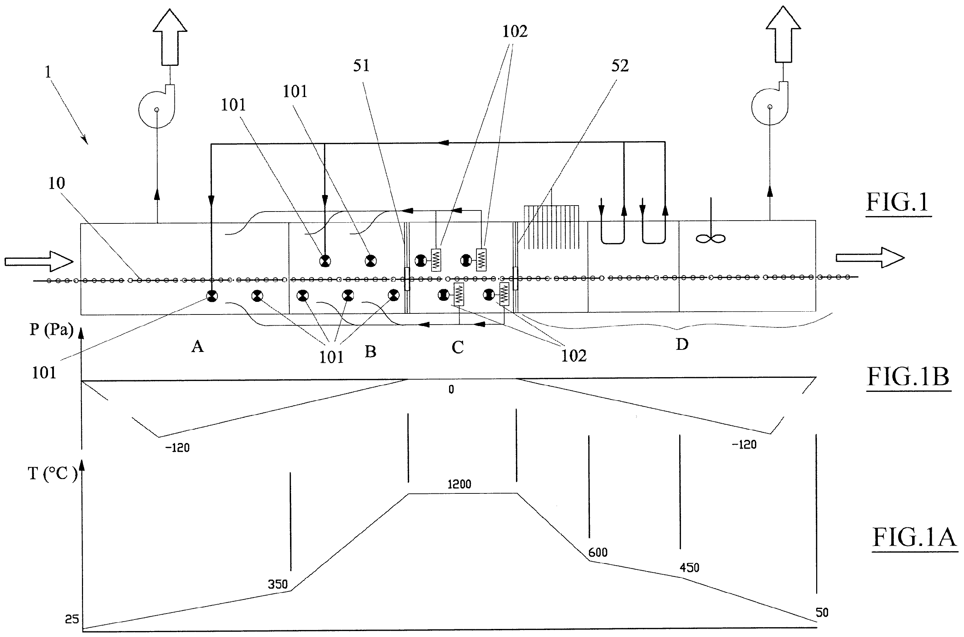

The temperature profile in these areas is shown in figure 1A, while the pressure profile is shown in figure 1B.

The heat generators present in zones A and B are free flame burners 101, working by convection, while in the firing zone C the heating elements are constituted by radiating modules 102 according to the invention.

Area C is delimited inside the tunnel by two separating walls 51 and 52 which contribute to isolating it as much as possible from the adjacent areas B and D.

The kiln comprises two chimney flues at the inlet and outlet of the material, added-to by fans so as to evacuate the gases respectively of the firing zone and the cooling zone.

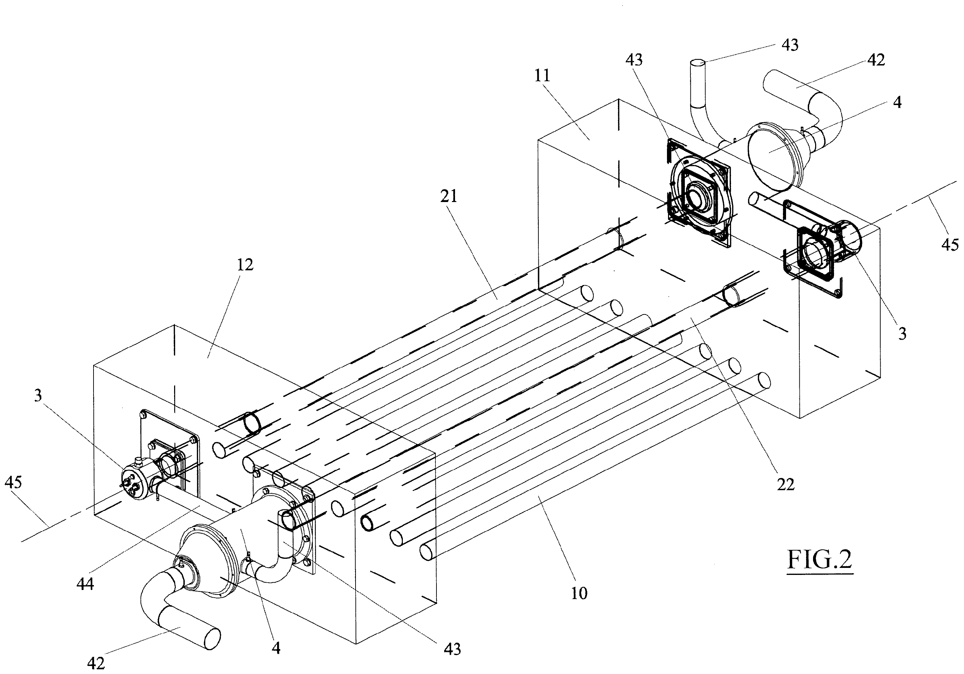

With reference to figure 2, each module 102 comprises a first radiant tube 21 and a second radiant tube 22, both made of silicon carbide or another equivalent material.

The two tubes 21 and 22 are parallel to one another, on a same side of the roller plane 10, and equidistant from the plane 10.

The two tubes 21 and 22 are both supported between the lateral walls 11 and 12 of the tunnel kiln, or a modular element of the kiln, through which the exit to outside.

At the ends 21 and 22 thereof, each of the two tubes includes a free flame burner 3 and a heat exchanger 4 supplied by the fumes of the burner 3.

The ends of the two tubes 21 and 22 exiting from the lateral wall of the kiln, for example the wall 11, respectively comprise the free-flame burner 3 and the heat exchanger 4.

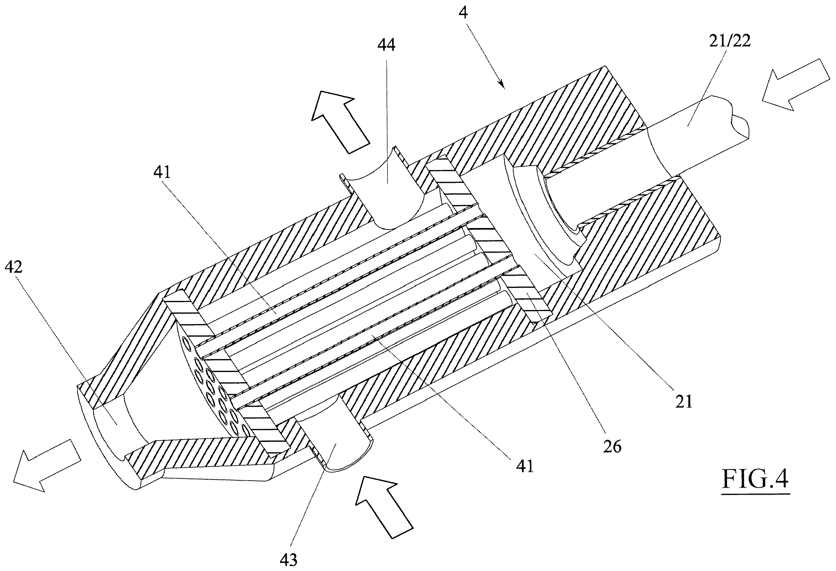

The heat exchanger 4 comprises (figure 4) a tube bundle 41, crossed by the combustion gases, which opens into an exhaust manifold 42 connected to the other side of the kiln.

The heat exchanger 4 further comprises a fresh air inlet 43 and an outlet 44 for the heated air from the heat exchanger.

The outlet 44 is connected to the burner 3 of the adjacent tube so as to supply the comburent air to the burner.

Thanks to this arrangement, the radiant tubes 21 and 22, crossed by the combustion gases, reach a temperature of higher than 1200-1250°C, and maintain the section of the kiln at the correct firing temperature, in a calm atmosphere and free of the combustion fumes.

The fuel reaches the burners 3 through the conduits 45.

In a case where the width of the kiln is close to 3,000 mm, the temperature is practically constant over the whole width, with a maximum difference between a point and a facing point of the advancement front of 4 - 6°C.

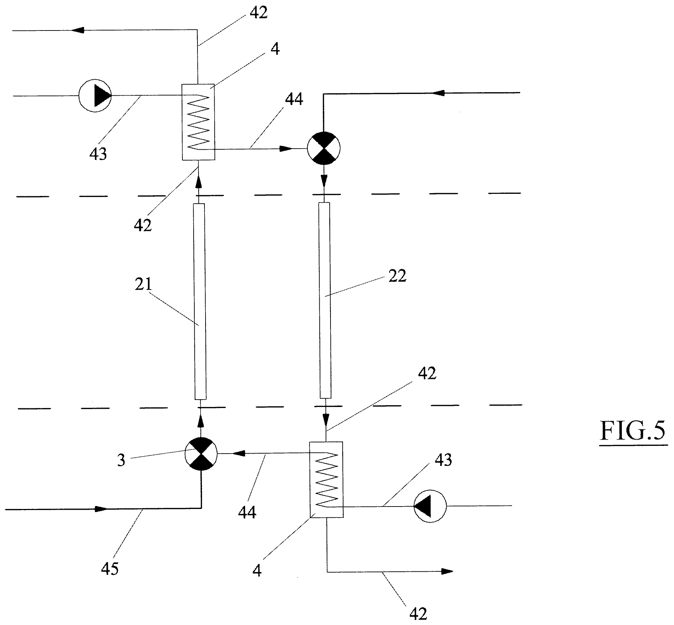

The module illustrated in figures from 2 to 4 is schematically shown in figure 5, where the same components are denoted by the same reference numerals.

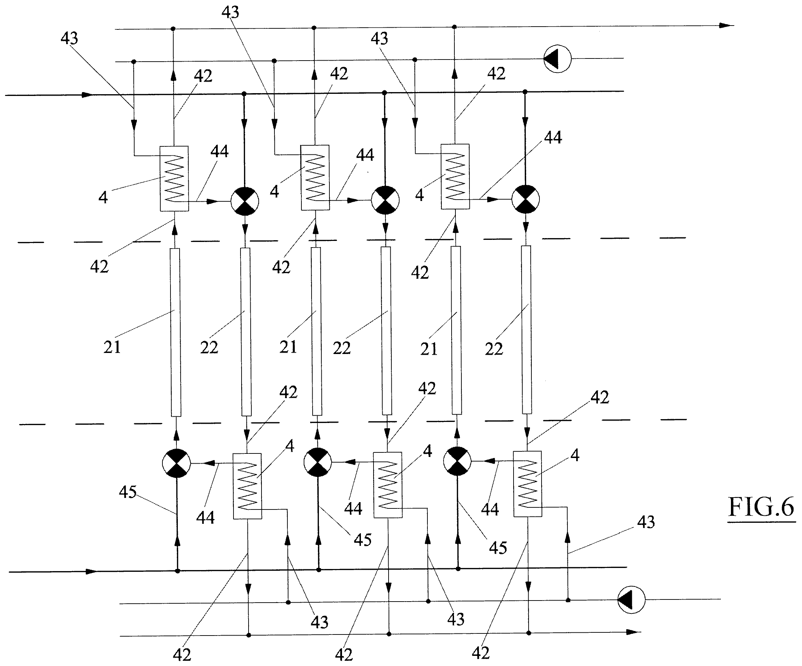

Figure 6 illustrates a heating module having three pairs of radiant tubes, the components of which are denoted by the same reference numerals as in figure 5.

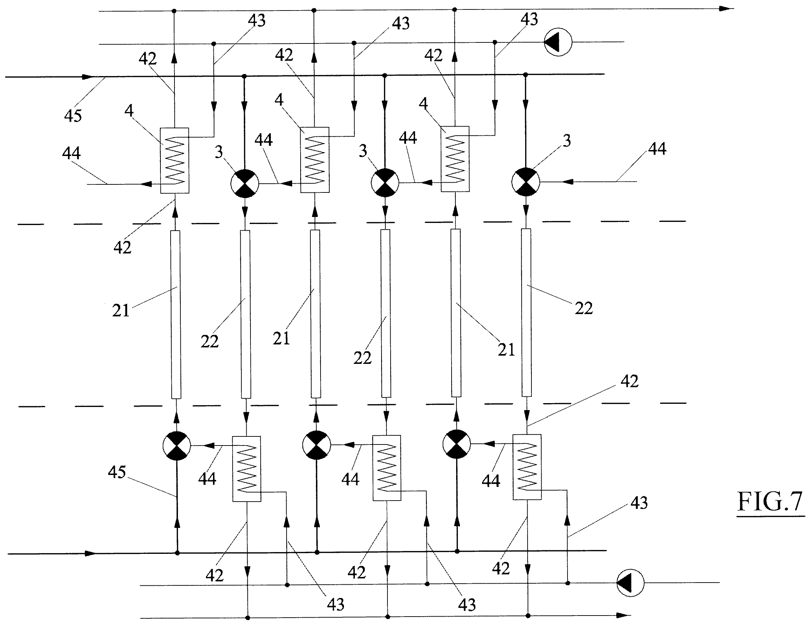

Figure 7 is a variant of figure 6 and is self-illustrative.

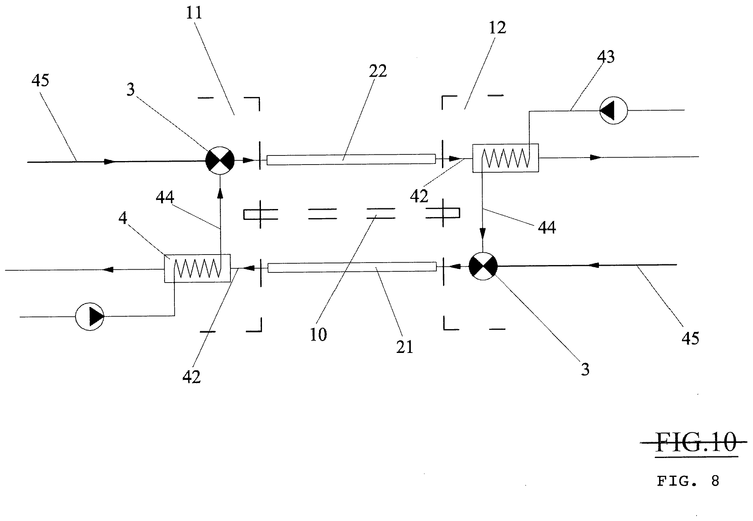

Lastly, figure 8 shows an arrangement of the pair of radiant tubes 21 and 22 of each module in which a tube is placed above the plane of the rollers, while the other tube of the pair is placed below, differently to the previous figures which show the arrangement of the pair of radiant tubes of each module in a plane parallel to the plane of the conveyor rollers of the material being fired, with the same also being true for the burners situated below the roller plane. Also in figure 8 the same components are denoted by the same reference numerals.

Many advantages are attained by the invention.

Primarily, it achieves a greater uniformity of temperature across the entire width of the kiln, thanks to the heat transfer by radiation only, which leads to the manufacture of products having small dimensional distortion (differential shrinkage).

Further, there is no contact between the exhaust fumes and the atmosphere in the firing chamber, which stays calm and thus enables excellent surface qualities of the finished product to be obtained, with a shininess and compactness of the surfaces that are above average and free of defects.

A considerable energy recovery is achieved by the efficient preheating of the combustion air (up to 500°C), thanks to the heat exchanger.

Use of the residual calorie content of the combustion fumes coming from the plurality of the heat exchangers is ensured by recycling of the exhaust fumes in the zone of the kiln regulated between 800°C and 900°C.

By preventing contact of the fumes with the firing environment in the most critical area, cheaper fuels can be used (heavy oil fractions and coal slack) without affecting the quality of the ceramic product exiting the kiln.

In comparison with other known solutions using coaxial radiant tubes, the small load losses made possible by the system of radiant tubes - heat exchangers increase the overall efficiency of the system, as less electrical power is required by the fans for blowing combustion air, in comparison with equivalent known devices (coaxial radiant tubes).

The system is also more reliable.

Lastly, the preheated air, coming from the indirect cooling, is destined only for the pre-heating and pre- firing burners, and not for the innovative firing burners, thus enabling a greater calorie provision for each individual burner.

It is understood that the invention is not limited to the modes of implementation described above, and that variations and improvements may be made to the invention without departing from the scope of protection of the following claims.

## Claims

1. A radiating heating module (102) for a tunnel kiln (1) for continuous-cycle firing of ceramic products such as tiles, slabs, bricks, sanitary appliances and the like, which advance on a roller plane (10) located internally of the tunnel, in which the heating means are of a radiant type, **characterised in that** it comprises a pair of parallel radiant tubes (21, 22), each comprising at an end thereof a free flame burner (3), combustion gases of which flow along the tube, and at an opposite end thereof a heat exchanger (4) crossed by the combustion gases, the two radiant tubes (21, 22) being reciprocally orientated in an opposite direction so that the end of the tube of each pair comprising the burner (3) is adjacent to the end of the other tube of the same pair comprising the heat exchanger (4), the comburent air conduit of the burner (3) of a tube comprising the adjacent heat exchanger (4) located at the end of the other tube.

2. The radiating heating module (102) of claim 1, **characterised in that** it comprises two opposite portions of the lateral walls (11, 12) of the tunnel kiln (1), between which the two radiant tubes (21, 22) of each pair of radiant tubes are located, and externally of which are located the burner (3) and respectively the heat exchanger (4).

3. The radiating heating module (102) of claim 1, **characterised in that** the two parallel radiant tubes (21, 22) lie on a parallel plane to the roller plane (10) located internally of the tunnel.

4. The radiating heating module (102) of claim 1, **characterised in that** the two parallel radiant tubes (21, 22) lie on a plane crossing the roller plane (10) located internally of the tunnel, such that one of the tubes of the pair is located on a side of the roller plane (10) and the other tube of the pair is located on the other side of the roller plane (10).

5. A tunnel kiln (1) for continuous-cycle firing of ceramic products such as tiles, slabs, bricks, sanitary appliances and the like, which advance on a roller plane (10) located internally of the tunnel, in which the tunnel comprises at least a pre-firing zone (B) in which the temperature is comprised between about 350°C and about 1,200°C, followed by a firing zone (C) in which the temperature must be maintained at about 1,200°C, **characterised in that** the firing zone (C) comprises at least a pair of parallel radiant tubes (21, 22) supported by the lateral walls (11, 12) of the tunnel, each tube (21, 22) comprising, externally of the lateral walls (11, 12) of the tunnel and at an end of the tube (21, 22), a free flame burner (3) the combustion gases of which flow through the tube, and at the opposite end thereof a heat exchanger (4) crossed by the combustion gases, the two radiant tubes (21, 22) of each pair of tubes being reciprocally orientated in an opposite direction so that the end of the tube comprising the burner (3) is adjacent to the end of the other tube comprising the heat exchanger (4), the comburent air conduit of the burner (3) of a tube comprising the adjacent heat exchanger (4) located at the end of the other tube.

6. The tunnel kiln (1) of claim 5, **characterised in that** the heat exchanger (4) comprises an outlet conduit of the exhaust gases which is connected to the pre-firing zone (C) of the kiln.

## Patentansprüche

1. Strahlungsheizmodul (102) für einen Tunnelofen (1) zum Durchlaufbrennen von keramischen Produkten, wie beispielsweise Fliesen, Platten, Ziegelsteine, Sanitärgeräte und dergleichen, die auf einer Rollenebene (10) vorwärtsbewegt werden, die sich im Inneren des Tunnels befindet, bei dem die Heizmittel von einem Strahlungstyp sind, **dadurch gekennzeichnet, dass** es ein Paar paralleler Strahlungsrohre (21, 22) umfasst, jedes umfassend an einem Ende einen Freiflammenbrenner (3), dessen Verbrennungsgase entlang des Rohrs strömen, und an einem entgegengesetzten Ende davon einen Wärmetauscher (4), der von den Verbrennungsgasen durchströmt wird, wobei die zwei Strahlungsrohre (21, 22) wechselseitig in entgegengesetzter Richtung ausgerichtet sind, sodass das Ende des Rohrs von jedem Paar, das den Brenner (3) umfasst, anliegend an dem Ende des anderen Rohrs desselben Paars ist, das den Wärmetauscher (4) umfasst, wobei sich die Verbrennungsluftleitung des Brenners (3) eines Rohrs, das den anliegenden Wärmetauscher (4) umfasst, an dem Ende des anderen Rohrs befindet.

2. Strahlungsheizmodul (102) nach Anspruch 1, **dadurch gekennzeichnet, dass** es zwei gegenüberliegende Abschnitte der Seitenwände (11, 12) des Tunnelofens (1) umfasst, zwischen denen sich die zwei Strahlungsrohre (21, 22) von jedem Paar Strahlungsrohre befinden und außerhalb von denen sich der Brenner (3) und jeweils der Wärmetauscher (4) befinden.

3. Strahlungsheizmodul (102) nach Anspruch 1, **dadurch gekennzeichnet, dass** die zwei parallelen Strahlungsrohre (21, 22) auf einer parallelen Ebene zu der Rollenebene (10) liegen, die sich im Inneren des Tunnels befindet.

4. Strahlungsheizmodul (102) nach Anspruch 1, **dadurch gekennzeichnet, dass** die zwei parallelen Strahlungsrohre (21, 22) auf einer Ebene liegen, die die Rollenebene (10) kreuzt, die sich im Inneren des Tunnels befindet, sodass sich eines der Rohre des Paars auf einer Seite der Rollenebene (10) und das andere Rohr des Paars auf der anderen Seite der Rollenebene (10) befindet.

5. Tunnelofen (1) zum Durchlaufbrennen von keramischen Produkten, wie beispielsweise Fliesen, Platten, Ziegelsteine, Sanitärgeräte und dergleichen, die auf einer Rollenebene (10) vorwärtsbewegt werden, die sich im Inneren des Tunnels befindet, bei dem der Tunnel mindestens eine Vorbrennzone (B) umfasst, in der die Temperatur zwischen etwa 350 °C und etwa 1200 °C ist, gefolgt von einer Brennzone (C), in der die Temperatur auf etwa 1200 °C gehalten werden muss, **dadurch gekennzeichnet, dass** die Brennzone (C) mindestens ein Paar paralleler Strahlungsrohre (21, 22) umfasst, die von den Seitenwänden (11, 12) des Tunnels getragen werden, jedes Rohr (21, 22) umfassend, außerhalb der Seitenwände (11, 12) des Tunnels und an einem Ende des Rohrs (21, 22), einen Freiflammenbrenner (3), dessen Verbrennungsgase durch das Rohr strömen, und an dem gegenüberliegenden Ende davon einen Wärmetauscher (4), der von den Verbrennungsgasen durchströmt wird, wobei die zwei Strahlungsrohre (21, 22) von jedem Paar Rohre wechselseitig in entgegengesetzter Richtung ausgerichtet sind, sodass das Ende des Rohrs, das den Brenner (3) umfasst, anliegend an dem Ende des anderen Rohrs ist, das den Wärmetauscher (4) umfasst, wobei sich die Verbrennungsluftleitung des Brenners (3) eines Rohrs, das den anliegenden Wärmetauscher (4) umfasst, an dem Ende des anderen Rohrs befindet.

6. Tunnelofen (1) nach Anspruch 5, **dadurch gekennzeichnet, dass** der Wärmetauscher (4) eine Auslassleitung der Abgase umfasst, die mit der Vorbrennzone (C) des Ofens verbunden ist.

## Revendications

1. Module de chauffage par rayonnement (102) pour un four tunnel (1) pour la cuisson en cycle continu de produits céramiques tels que des tuiles, dalles, briques, appareils sanitaires, etc., avançant sur un plan à rouleaux (10) situé à l'intérieur du tunnel, dans lequel les moyens de chauffage sont de type par rayonnement, **caractérisé en ce qu'**il comprend une paire de tubes radiants parallèles (21, 22), chacun comprenant au niveau d'une des extrémités de ce dernier un brûleur à flamme libre (3), dont les gaz de combustion circulent le long du tube, et au niveau d'une extrémité opposée de ce dernier un échangeur thermique (4) traversé par les gaz de combustion, les deux tubes radiants (21, 22) étant réciproquement orientés dans une direction opposée de sorte que l'extrémité du tube de chaque paire comprenant le brûleur (3) est adjacente à l'extrémité de l'autre tube de la même paire comprenant l'échangeur thermique (4), le conduit d'air comburant du brûleur (3) d'un tube comprenant l'échangeur thermique adjacent (4) situé au niveau de l'extrémité de l'autre tube.

2. Module de chauffage par rayonnement (102) selon la revendication 1, **caractérisé en ce qu'**il comprend deux parties opposées des parois latérales (11, 12) du four tunnel (1), entre lesquelles se situent deux tubes radiants (21, 22) de chaque paire de tubes radiants et à l'extérieur desquelles se situent le brûleur (3) et respectivement l'échangeur thermique (4).

3. Module de chauffage par rayonnement (102) selon la revendication 1, **caractérisé en ce que** les deux tubes radiants parallèles (21, 22) reposent sur un plan parallèle au plan à rouleaux (10) situé à l'intérieur du tunnel.

4. Module de chauffage par rayonnement (102) selon la revendication 1, **caractérisé en ce que** les deux tubes radiants parallèles (21, 22) reposent sur un plan traversant le plan à rouleaux (10) situé à l'intérieur du tunnel, de sorte que l'un des tubes de la paire est situé sur un côté du plan à rouleaux (10) et l'autre tube de la paire est situé sur l'autre côté du plan à rouleaux (10).

5. Four tunnel (1) pour la cuisson en cycle continu de produits céramiques tels que des tuiles, dalles, briques, appareils sanitaires, etc., avançant sur un plan à rouleaux (10) situé à l'intérieur du tunnel, dans lequel le tunnel comprend au moins une zone de précuisson (B) dans laquelle la température est comprise entre 350 °C et 1 200 °C environ, suivie d'une zone de cuisson (C) dans laquelle la température doit être maintenue à environ 1 200 °C, **caractérisé en ce que** la zone de cuisson (C) comprend au moins une paire de tubes radiants parallèles (21, 22) soutenus par les parois latérales (11, 12) du tunnel, chaque tube (21, 22) comprenant, à l'extérieur des parois latérales (11, 12) du tunnel et au niveau d'une extrémité du tube (21, 22), un brûleur à flamme libre (3) dont les gaz de combustion circulent dans le tube, et au niveau de l'extrémité opposée de ce dernier un échangeur thermique (4) traversé par les gaz de combustion, les deux tubes radiants (21, 22) de chaque paire de tube étant réciproquement orientés dans une direction opposée de sorte que l'extrémité du tube comprenant le brûleur (3) est adjacente à l'extrémité de l'autre tube comprenant l'échangeur thermique (4), le conduit d'air comburant du brûleur (3) d'un tube comprenant l'échangeur thermique adjacent (4) situé au niveau de l'extrémité de l'autre tube.

6. Four tunnel (1) selon la revendication 5, **caractérisé en ce que** l'échangeur thermique (4) comprend un conduit de sortie des gaz d'échappement qui est connecté à la zone de précuisson (C) du four.
